# EUROPÄISCHE PATENTSCHRIFT

(11) **EP 2 019 765 B1**
(45) Veröffentlichungstag und Bekanntmachung des Hinweises auf die Patenterteilung: **26.05.2010**
(21) Anmeldenummer: 07727438.9
(22) Anmeldetag: 28.03.2007
(51) Int. Cl.: B60S 1/04

(54) **VORRICHTUNG UND VERFAHREN ZUR BEFESTIGUNG EINES WISCHERMOTORS AN EIN WISCHERGESTÄNGE**
DEVICE AND METHOD FOR FASTENING A WIPER MOTOR TO A WIPER LINKAGE
DISPOSITIF ET PROCÉDÉ POUR FIXER UN MOTEUR D'ESSUIE-GLACE SUR UNE TRINGLERIE D'ESSUIE-GLACE

(30) Priorität: 12.05.2006 DE 102006022382
(43) Veröffentlichungstag der Anmeldung: 04.02.2009
(73) Patentinhaber: Robert Bosch GmbH, 70442 Stuttgart (DE)
(72) Erfinder: KRAUS, Achim, 77815 Buehl (DE); WICKERMANN, Hans, 77815 Buehl (DE); BENNER, Andreas, 77830 Buehlertal (DE); HUTZLER, Norbert, E-08812 Roquetes (ES)
(86) Internationale Anmeldenummer: PCT/EP2007/052966
(87) Internationale Veröffentlichungsnummer: WO 2007/131830

(56) Entgegenhaltungen:
- DE-A1- 19 855 741
- DE-A1- 19 937 799
- FR-A1- 2 783 477
- GB-A- 917 908

## Beschreibung

### Stand der Technik

Die Erfindung betrifft eine Vorrichtung und ein Verfahren zur Befestigung eines Wischermotors an ein Wischergestänge mit einem rohrförmigen Träger und einem Halter, der an einem Gehäuse des Wischermotors ausgebildet ist und mindestens eine Vertiefung zur Aufnahme mindestens eines Befestigungselementes umfasst, wobei der rohrförmige Träger mindestens eine Aussparung aufweist, die komplementär zu der mindestens einen Vertiefung in dem Halter ausgebildet ist. Ferner betrifft die Erfindung eine Scheibenwischeranlage mit einer erfindungsgemäßen Vorrichtung.

Derartige Befestigungsvorrichtungen sind im Stand der Technik bekannt. Derzeit werden Wischeranlagen überwiegend als kompakte Baugruppen gefertigt, in denen die Wischerlager und Wischermotoren fest und unlösbar miteinander verbunden sind. Eine alternative Ausführung sieht vor, Wischeranlagen mit so genannten "Loose links" zu versehen, bei denen die Wischerlager und der Wischermotor lösbar miteinander verbunden sind. Jedoch haben die kompakten fest fixierten Wischeranlagen deutliche Vorteile im Bezug auf Toleranzen und auch im Fahrzeugbau. Derzeit erfolgt die Anbindung des Wischermotors in kompakten Wischeranlagen üblicherweise über Gußplatinen oder durch Verbindung eines an dem Gehäuse des Wischermotors ausgebildeten Motorhalter mit einem Platinenrohr. Bekannte Verbindungen sind Klemmverbindungen, Schweißverbindungen oder Verschraubungen, bei denen eine kraftschlüssige Verbindung über Schraube und Mutter erzielt wird.

Die Klemmverbindung zwischen Motorhalter und Platinenrohr lassen jedoch keine großen Bauteiltoleranzen zu. Sobald eine gewisse Toleranz überschritten ist, kann die erforderliche Reibkraft zur Verbindung nicht mehr aufgebracht werden.

Die Verbindung des Wischermotors mit dem Platinenrohr über Schweißverbindugen hat den Nachteil, dass die durch den Schweißprozeß eingebrachte Wärme das Material des Bauteils verändert, wodurch geschwächte Bereiche entstehen können. Ferner ist der Fertigungsprozeß relativ komplex.

Verbindung mittels Schraube und Mutter bringt einen erhöhten Montageaufwand mit sich. Soll die Vorrichtung in schwer zu erreichenden Abschnitten des Bauteils angebracht werden, ist die Montage nahezu unmöglich.

Dokument DE 198 55 741 A1 offenbart die Merkmale des Oberbegriffs des Anspruchs 1.

### Offenbarung der Erfindung

Es ist daher Aufgabe der vorliegenden Erfindung, eine Vorrichtung, eine Scheibenwischeranlage sowie ein Verfahren bereit zu stellen, die eine einfachere und schnellere Befestigung ermöglicht, ohne dabei die Verbindung zwischen Wischermotor und Wischergestänge negativ zu beeinflussen.

Diese Aufgabe wird erfindungsgemäß durch eine Vorrichtung gemäß Anspruch 1.

### Vorteile der Erfindung

Die erfindungsgemäße Vorrichtung mit den Merkmalen des unabhängigen Anspruchs 1 hat somit den Vorteil, dass während der Befestigung automatisch eine Vorpositionierung bzw. Positionierung des Wischermotors an dem Wischergestänge bei sehr einfacher Montage erfolgt, bei der der Monteur nur eine Hand benötigt. Daher kann auch eine Montage an schwer zugänglichen Positionen und auf sehr engem Raum erfolgen.

Gemäß der Erfindung weist der Befestigungsdom einen angespritzten Bund zur Positionierung und/oder Fixierung der Befestigungselemente in dem Befestigungsdom auf. Ein solcher Bund bildet beim Einsetzen von Blindnieten eine zusätzliche Sicherung vor einem herausrutschen der Befestigungselemente in axialer Befestigungsrichtung, da der Nietpils der Blindniet eine formschlüssige Verbindung mit dem Bund bildet.

Zweckmäßigerweise werden die Befestigungselemente durch selbstschneidende Gewindeschrauben, wie beispielsweise Gewindefurchschrauben, gebildet. Dadurch wird die Fixierung durch einen einzigen Fertigungsschritt erreicht, nämlich indem die Schrauben in den Befestigungsdom eingeschraubt werden. Ein Einbringen eines Gewindes in den Befestigungsdom bei oder nach dessen Herstellung bzw. die Notwendigkeit, eine Kontermutter vorzusehen, entfällt.

Ein alternatives Ausführungsbeispiel der vorliegenden Erfindung sieht vor, dass die Befestigungselemente durch Blindniete gebildet sind. Durch Einbringen der Blindniete beispielsweise mit einer entsprechenden Nietpistole ist eine einfache Montage gewährleistet und auch lediglich ein Montageschritt mittels eines Befestigungselements notwendig, wobei der Monteur nur eine Hand benötigt, was eine Montage auch in schwer zugänglichen Bereichen möglich macht.

Um den Wischermotor zu dem rohrförmigen Träger genau zu positionieren, können in dem Halter mindestens zwei Stifte ausgebildet sein, die in mindestens zwei an dem rohrförmigen Träger komplementär ausgebildete Aussparungen eingreifen. Dies ist eine besonders einfache Möglichkeit, eine weitere Positionierung bei der Montage des rohrförmigen Trägers an den Wischermotor bereit zu stellen.

Um eventuelle Bauteiltoleranzen ausgleichen zu können, kann eine der Aussparungen in dem rohrförmigen Träger in der Form eines Langlochs ausgebildet sein.

Eine für die Fertigung der Vorrichtung besonders vorteilhafte Ausbildung sieht vor, dass der erfindungsgemäße Befestigungsdom und/oder die Positionierstifte in Entformungsrichtung des Wischermotors ausgebildet sind. Dadurch wird verhindert, dass bei der Entformung des Wischermotors eventuell Befestigungsdome und/oder Stifte verformt oder beschädigt werden, so dass der Produktionsausschuss verringert wird.

Normalerweise sind in jedem Befestigungsdom jeweils eine Vertiefung zur Einbringung des Befestigungsmittels vorgesehen. Es ist jedoch auch möglich, einen Befestigungsdom derart auszubilden, dass sein Befestigungsbereich sich über den vollständigen Berührungsbereich zwischen Befestigungsdom und rohrförmigen Träger erstreckt und mit mehreren Vertiefungen ausgebildet ist. Durch die Möglichkeit einer flexiblen Anordnung ist eine Anpassung an verschiedene geänderte Anschraubbilder ohne eine Neukonstruktion des Gehäusehalters möglich.

Sind beispielsweise drei Vertiefungen in einem entsprechenden Befestigungsdom ausgebildet, so kann ohne Änderung der konstruktiven Ausgestaltung des Befestigungsdoms ein rohrförmiger Träger mit zwei verschiedenen Anschraubbildern an dem Befestigungsdom angeschraubt bzw. vernietet werden. Somit ist es möglich, die Befestigung in verschiedenen Positionen an veränderte Bauteilgeometrien anzupassen, ohne dazu einen neuen Befestigungsdom vorsehen zu müssen. Der an dem Wischermotor vorgesehene Halter ist somit sehr flexibel einsetzbar. Eine solche Flexibilität lässt sich natürlich auch erreichen, wenn beispielsweise drei Befestigungsdome vorgesehen sind und nur zwei Befestigungsdome zur Fixierung notwendig sind.

In vorteilhafter Weise ist der Befestigungsdom mittels einer Schweißverbindung mit dem Gehäuse verbunden. Die Befestigung des Befestigungsdoms kann aber auch durch Schraubenverbindungen erfolgen. Es ist auch möglich, die Befestigungsdome an dem Gehäuse des Wischermotors anzuformen.

### Kurze Beschreibung der Zeichnungen

Ausführungsbeispiele der Erfindungen sind in den Zeichnungen dargestellt und in der nachfolgenden Beschreibung näher erläutert.

Es zeigen
- Figur 1: eine Explosionszeichnug der erfindungsgemäßen Vorrichtung mit selbstschneidenden Gewindeschrauben;
- Figur 2: eine öffnungsgemäße Vorrichtung, bei der die Fixierung von Wischermotor und rohrförmigen Träger mittels Blindniete erreicht ist; und
- Figur 3: einen Schnitt durch die erfindungsgemäße Vorrichtung, in der ein Bund in dem Befestigungsdom ausgebildet ist.

### Ausführungsformen der Erfindung

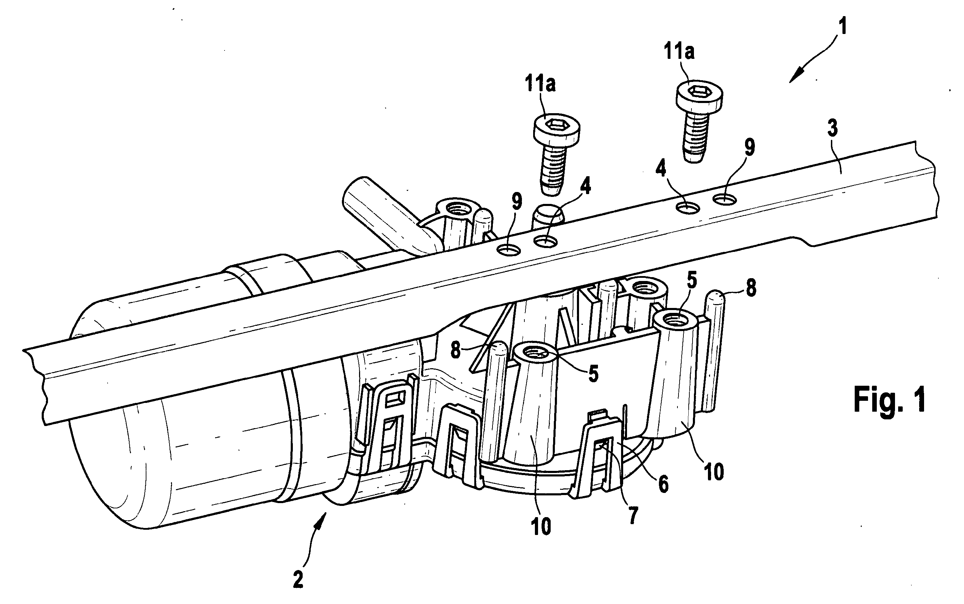

Die Figur 1 zeigt eine Explosionszeichnung einer erfindungsgemäßen Vorrichtung 1 zur Befestigung eines Wischermotors 2 an ein Wischergestänge mit einem röhrförmigen Träger in der Form eines Platinenrohres 3. Das Platinenrohr 3 weist entlang seiner Längserstreckung zwei Enden auf, an denen jeweils ein Wischerlager, beispielsweise durch eine Vercrimpung, befestigt ist. Die Wischerlager tragen hierbei die Wischerwellen, die im Betrieb derart angetrieben werden, daß sie eine Pendelbewegung vollführen. An den Wischerwellen sind die Wischerarme mit dem Wischblättern befestigt sind. Aus Gründen der Übersichtlichkeit sind die Enden des Platinenrohrs 3 mit den Wischerlagem und Wischerwellen nicht gezeichnet.

Im Bereich der Motoranbindung ist das Platinenrohr 3 in U-Profilform umgeformt und weist zwei Aussparungen 4 auf, die komplementär zu zwei in zwei Befestigungsdomen 10 versehenen Vertiefungen 5 in einem Halter 6 ausgebildet sind. Der Halter 6 ist an einem Gehäuse 7 des Wischermotors 2 angeformt, an welchem die zwei Befestigungsdome 10 zur Fixierung des Wischermotors 2 an dem Platinenrohr 3 ausgebildet sind. Ferner weist das Platinenrohr 3 zwei weitere Aussparungen 9 auf, in die zwei an dem Gehäuse 7 des Halters 6 komplementär ausgebildete Stifte 8 des Wischermotors 2 eingreifen.

Zur Befestigung des Wischermotors 2 an dem Platinenrohr 3 wird das Platinenrohr 3 zunächst auf die Befestigungsdome 10 des Wischermotors 2 aufgeschoben. Durch die im U-Profil des Platinenrohrs 3 ausgebildeten Schenkel wird beim Aufschieben des Platinenrohrs 3 auf die Befestigungsdome 10 eine Grobzentrierung erreicht. Anschließend werden die Befestigungselemente hier in Form von Gewindefurchschrauben 11a durch die Aussparungen 4 in die Vertiefungen 5 der Befestigungsdome 10 eingeschraubt. Natürlich sind auch jegliche andere Arten von gewindeschneidenden Schrauben denkbar. Auch ist es möglich, bereits bei der Herstellung des Befestigungsdomes 10 in den Vertiefungen 5 Gewinde vorzusehen, so dass auch normale Schrauben durch die Aussparung 4 in die Vertiefungen 5 der Befestigungsdome 10 eingeschraubt werden können, um eine Verbindung zwischen dem Platinenrohr 3 und dem Gehäuse 7 des Wischermotors 2 zu erreichen. Die Stifte 8 sind in diesem Ausführungsbeispiel an dem Gehäuse 7 des Wischermotors 2 angegossen, und sorgen für eine exakte Positionierung des Platinenrohrs 3 in zwei Raumrichtungen.

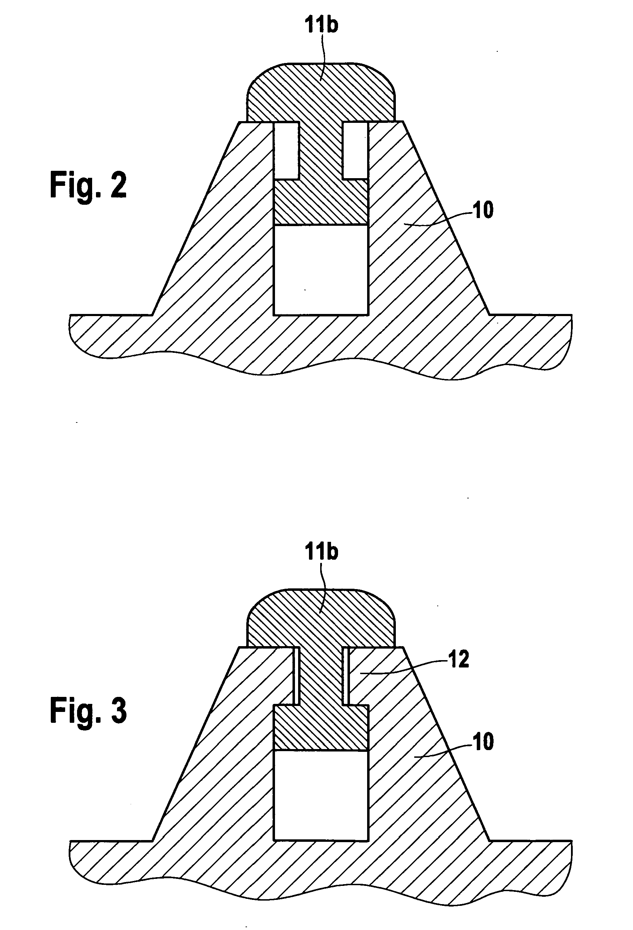

Die Figur 2 zeigt eine Teildarstellung eines alternativen Ausführungsbeispiels der Vorrichtung 1. Es ist ein Schnitt durch einen Befestigungsdom 10 gezeigt.

In diesem Ausführungsbeispiel sind die Gewindefurchschrauben 11a durch kostengünstigere Blindniete 11b ersetzt worden, wodurch eine formschlüssige Verbindung mit reibschlüssigen Anteilen zwischen den Innenwandungen des Befestigungsdomes 10 und dem Nietpils der Blindniet erreicht wird, indem die Blindniet 11b in die Vertiefung 5 des Befestigungsdoms 10 eingebracht wird, wodurch sich der Nietpils entsprechend der geometrischen Ausbildung der Vertiefung 5 in dem Befestigungsdom 10 verformt.

Die Figur 3 zeigt ein weiteres Ausführungsbeispiel der erfindungsgemäßen Vorrichtung 1 bei der die Befestigungsmittel ebenfalls durch Blindniete 11b gebildet werden. Zur Sicherung gegen ein ungewolltes Herausrutschen der Blindniete aus dem Befestigungsdom 10 weist der Befestigungsdom 10 einen angespritzten Bund 12 zur Positionierung und/oder Fixierung der Blindniet auf. Die zusätzliche Fixierung der Blindniet 11b in dem Befestigungsdom 10 in axialer Richtung wird dadurch erreicht, das der Nietpils zusätzlich zu der Reib- und formschlüssigen Verbindung mit der Innenwandung des Befestigungsdomes 10 eine formschlüssige Verbindung mit dem Bund 12 in axialer Richtung bildet.

## Patentansprüche

1. Vorrichtung (1) zur Befestigung eines Wischermotors (2) an ein Wischergestänge mit einem rohrförmigen Träger (3) und einem Halter (6), der an einem Gehäuse (7) des Wischermotors (2) ausgebildet ist und mindestens eine Vertiefung zur Aufnahme mindestens eines Befestigungselementes umfasst, wobei der rohrförmige Träger (3) mindestens eine Aussparung (4) aufweist, die komplementär zu der mindestens einen Vertiefung (5) in dem Halter (6) ausgebildet ist, wobei die mindestens eine Vertiefung (5) in mindestens einem Befestigungsdom (10) ausgebildet ist, auf den der rohrförmige Träger (3) im Bereich seiner Aussparung (4) derart vorpositionierend auf den Halter (6) aufschiebbar ist, dass der rohrförmige Träger (3) und der Wischermotor (2) durch Einsetzen der Befestigungselemente aneinander fixierbar sind, **dadurch gekennzeichnet, dass** der Befestigungsdom (10) einen angespritzten Bund zur Positionierung und/oder Fixierung der Befestigungselemente (11a, 11b) in dem Befestigungsdom (10) aufweist.

2. Vorrichtung (1) nach Anspruch 1, **dadurch gekennzeichnet, dass** die Befestigungselemente durch selbstschneidende Gewindeschrauben (11a) gebildet sind.

3. Vorrichtung (1) nach Anspruch 1, **dadurch gekennzeichnet, dass** die Befestigungselemente durch Blindniete (11b) gebildet sind.

4. Vorrichtung (1) nach einem der vorhergehenden Ansprüche, **dadurch gekennzeichnet, dass** der Halter (6) mindestens zwei Stifte (8) aufweist, die zur Positionierung des Wischermotors (2) zu dem rohrförmigen Träger (3) in mindestens zwei am rohrförmigen Träger (3) komplementär ausgebildete Aussparungen (9) eingreifen.

5. Vorrichtung (1) nach Anspruch 4, **dadurch gekennzeichnet, dass** eine der Aussparungen (4, 9) in dem rohrförmigen Träger (3) in Form eines Langloches ausgebildet ist.

6. Vorrichtung (1) nach einem der vorhergehenden Ansprüche, **dadurch gekennzeichnet, dass** der Befestigungsdom (10) und/oder die Stifte (8) in Entformungsrichtung des Wischermotors (2) ausgebildet sind.

7. Scheibenwischanlage mit einer Vorrichtung nach einem der Ansprüche 1 bis 6.

8. Verfahren zur Befestigung eines Wischermotors (2) an ein Wischerlager mit einer Vorrichtung (1) nach einem der Ansprüche 1 bis 6, umfassend die Schritte:
- Anformen eines Halters (6) an ein Gehäuse (7) des Wischermotors (2) in der Form mindestens eines Befestigungsdoms (10),
- Aufschieben eines rohrförmigen Träger (3) auf den Befestigungsdom (10) des Wischermotors (2) zur Vor-/Positionierung des rohrförmigen Trägers (3) zum Wischermotor (2),
- Einsetzen mindestens eines Befestigungselementes (11a, 11b) in den Befestigungsdom (10) zur Fixierung des Wischermotors (2) an dem rohrförmigen Träger (3).

## Claims

1. Apparatus (1) for fastening a wiper motor (2) to a wiper linkage having a tubular support (3) and a holder (6) which is formed on a housing (7) of the wiper motor (2) and comprises at least one recess for accommodating at least one fastening element, with the tubular support (3) having at least one cutout (4) which is formed in a complementary manner to the at least one recess (5) in the holder (6), with the at least one recess (5) being formed in at least one fastening dome (10), it being possible for the tubular support (3) to be pushed onto the said fastening dome in the region of the cutout (4) in the said tubular support, so as to be prepositioned on the holder (6), in such a way that the tubular support (3) and the wiper motor (2) can be fixed to one another by inserting the fastening elements, **characterized in that** the fastening dome (10) has an injection-moulded collar for positioning and/or fixing the fastening elements (11a, 11b) in the fastening dome (10).

2. Apparatus (1) according to Claim 1, **characterized it that** the fastening elements are formed by self-tapping threaded screws (11a).

3. Apparatus (1) according to Claim 1, **characterized in that** the fastening elements are formed by blind rivets (11b).

4. Apparatus (1) according to one of the preceding claims, **characterized in that** the holder (6) has at least two pins (8) which engage in at least two cutouts (9) which are formed in a complementary manner in the tubular support (3) for the purpose of positioning the wiper motor (2) in relation to the tubular support (3).

5. Apparatus (1) according to Claim 4, **characterized in that** one of the cutouts (4, 9) in the tubular support (3) is in the form of an elongate hole.

6. Apparatus (1) according to one of the preceding claims, **characterized in that** the fastening dome (10) and/or the pins (8) are formed in the demoulding direction of the wiper motor (2).

7. Windscreen wiper system having an apparatus according to one of Claims 1 to 6.

8. Method for fastening a wiper motor (2) to a wiper bearing with an apparatus (1) according to one of Claims 1 to 6, comprising the steps of:
- integrally forming a holder (6) on a housing (7) of the wiper motor (2) in the form of at least one fastening dome (10),
- pushing a tubular support (3) onto the fastening dome (10) of the wiper motor (2) for the purpose of prepositioning/positioning the tubular support (3) in relation to the wiper motor (2),
- inserting at least one fastening element (11a, 11b) into the fastening dome (10) for the purpose of fixing the wiper motor (2) to the tubular support (3).

## Revendications

1. Dispositif (1) de fixation d'un moteur d'essuie-glace (2) sur une tringlerie d'essuie-glace avec un support tubulaire (3) et une fixation (6) qui est réalisée sur un boîtier (7) du moteur d'essuie-glace (2) et qui comprend au moins un renfoncement pour recevoir au moins un élément de fixation, le support tubulaire (3) présentant au moins un évidement (4) qui est réalisé sous forme complémentaire à l'au moins un renfoncement (5) dans la fixation (6), l'au moins un renfoncement (5) étant réalisé dans au moins un dôme de fixation (10) sur lequel peut être poussé le support tubulaire (3) dans la région de son évidement (4) en se prépositionnant sur la fixation (6) de telle sorte que le support tubulaire (3) et le moteur d'essuie-glace (2) puissent être fixés l'un à l'autre en insérant les éléments de fixation, **caractérisé en ce que** le dôme de fixation (10) présente un épaulement moulé dessus pour le positionnement et/ou la fixation des éléments de fixation (11a, 11b) dans le dôme de fixation (10).

2. Dispositif (1) selon la revendication 1, **caractérisé en ce que** les éléments de fixation sont formés par des vis filetées autotaraudeuses (11a).

3. Dispositif (1) selon la revendication 1, **caractérisé en ce que** les éléments de fixation sont formés par des rivets borgnes (11b).

4. Dispositif (1) selon l'une quelconque des revendications précédentes, **caractérisé en ce que** la fixation (6) présente au moins deux goupilles (8) qui viennent en prise pour le positionnement du moteur d'essuie-glace (2) par rapport au support tubulaire (3) dans au moins deux évidements (9) réalisées de manière complémentaire sur le support tubulaire (3).

5. Dispositif (1) selon la revendication 4, **caractérisé en ce que** l'un des évidements (4, 9) dans le support tubulaire (3) est réalisé sous forme d'un trou oblong.

6. Dispositif (1) selon l'une quelconque des revendications précédentes, **caractérisé en ce que** le dôme de fixation (10) et/ou les goupilles (8) sont réalisés dans la direction de déformation du moteur d'essuie-glace (2).

7. Installation d'essuie-glace comprenant un dispositif selon l'une quelconque des revendications 1 à 6.

8. Procédé de fixation d'un moteur d'essuie-glace (2) sur un support d'essuie-glace comprenant un dispositif (1) selon l'une quelconque des revendications 1 à 6, comprenant les étapes suivantes :
- formation d'une fixation (6) sur un boîtier (7) du moteur d'essuie-glace (2) en forme d'au moins un dôme de fixation (10),
- enfoncement d'un support tubulaire (3) sur le dôme de fixation (10) du moteur d'essuie-glace (2) pour le prépositionnement ou le positionnement du support tubulaire (3) par rapport au moteur d'essuie-glace (2),
- insertion d'au moins un élément de fixation (11a, 11b) dans le dôme de fixation (10) pour fixer le moteur d'essuie-glace (2) sur le support tubulaire (3).
